# EUROPÄISCHE PATENTSCHRIFT

(11) **EP 3 580 020 B1**
(45) Veröffentlichungstag und Bekanntmachung des Hinweises auf die Patenterteilung: **30.12.2020**
(21) Anmeldenummer: 18717890.0
(22) Anmeldetag: 09.04.2018
(51) Int. Cl.: B25J 11/00, H02G 1/00, H01R 43/28, H01R 43/20, B65H 51/00, H01B 13/012

(54) **ANLAGE SOWIE VERFAHREN ZUM AUTOMATISIERTEN HERSTELLEN EINES KABELSATZES**
SYSTEM AND METHOD FOR THE AUTOMATED PRODUCTION OF A WIRING HARNESS
INSTALLATION ET PROCÉDÉ DE FABRICATION AUTOMATISÉE D'UN FAISCEAU DE CÂBLES

(30) Priorität: 10.04.2017 DE 102017206140
(43) Veröffentlichungstag der Anmeldung: 18.12.2019
(73) Patentinhaber: LEONI Bordnetz-Systeme GmbH, 97318 Kitzingen (DE)
(72) Erfinder: DIETLEIN, Fabian, 91413 Neustadt/Aisch (DE); GUNI, Christian, 97318 Kitzingen (DE); HEISLER, Paul, 92224 Amberg (DE); JAECKLEIN, Roland, 97318 Kitzingen (DE); MARTINS, Paulo, 97318 Kitzingen (DE); TAVSEL, Onur, 97082 Würzburg (DE)
(74) Vertreter: FDST Patentanwälte
(86) Internationale Anmeldenummer: PCT/EP2018/059018
(87) Internationale Veröffentlichungsnummer: WO 2018/189104

(56) Entgegenhaltungen:
- EP-A1- 0 661 721
- EP-A1- 0 661 721
- WO-A1-2016/158339
- WO-A1-2016/158339
- US-A1- 2002 144 395
- US-A1- 2002 144 395

## Beschreibung

Die Erfindung betrifft eine Anlage sowie ein Verfahren zum automatisierten Herstellen eines Kabelsatzes, insbesondere für ein Kraftfahrzeug.

Ein Kabelsatz weist allgemein eine Vielzahl von einzelnen Leitungselementen auf, die miteinander verbunden sind. Bei den Leitungselementen handelt es sich insbesondere um Adern, verdrillte Adern (paare), Lichtwellenleiter oder auch vorgefertigte Teilleitungen, beispielsweise Mantelleitungen. Unter Ader wird allgemein ein von einer Isolierung umgebener Leiter, entweder ein Leiterdraht oder ein Litzenleiter verstanden. Ein jeweiliger Kabelsatz weist dabei eine verzweigte Struktur auf, die einer späteren Verlegestruktur beispielsweise innerhalb eines Kraftfahrzeugs oder in einer sonstigen Anlage entspricht. Unter verzweigter Struktur wird hierbei verstanden, dass einzelne Leitungselemente an unterschiedlichen Positionen des Kabelsatzes von einem Hauptstrang abzweigen. Üblicherweise sind beim fertigen Kabelsatz zumindest an einigen der Leitungselemente endseitig Stecker oder sonstige Kontaktelemente angeschlagen.

Das Herstellen und die Handhabung derartiger Kabelsätze ist aufwendig. Speziell in der Kraftfahrzeugindustrie gibt es - selbst bei einem gleichen Kraftfahrzeug-Modell - aufgrund der unterschiedlichen und vom Kunden individuell vorgebbaren Ausstattungsvarianten eine Vielzahl von unterschiedlichen Kabelsatz-Typen. Üblicherweise wird ein Kabelsatz für ein individuell vom Kunden konfiguriertes Kraftfahrzeug erst nach Bestelleingang des Kunden gefertigt. Aufgrund der gewünschten kurzen Lieferzeiten ist ein möglichst schnelles Herstellen eines individuellen Kabelsatzes angestrebt.

Aufgrund der großen Typen- und Variantenvielfalt dieser individuellen Kabelsätze ist eine Automatisierung der Herstellung derartiger Kabelsätze schwierig, weswegen bis heute bei der Herstellung von Kabelsätzen speziell für die Kraftfahrzeugindustrie weiterhin ein hoher manueller Anteil erforderlich ist. Typischerweise werden die einzelnen Leitungselemente entlang von sogenannten Kabelbrettern entsprechend einer vorgegebenen individuellen verzweigten Struktur manuell verlegt und anschließend werden die einzelnen Leitungselemente beispielsweise durch Bandierungen manuell aneinander fixiert.

Aus der US 2018/0075951 A1 ist ein teilautomatisiertes Verfahren zur Herstellung von Kabelsätzen aus Einzelleitern zu entnehmen. Bei diesem werden die Einzelleiter mit ihren Enden an Verbindern hängend befestigt, die jeweils an verschiebbaren Trägerschienen angebracht sind. Die einzelnen Verbinder können in eine verzweigte Struktur verteilt werden.

Aus der DE 33 27 583 A1 ist ein teilautomatisiertes Verfahren zur Herstellung von Kabelsätzen aus Einzelleitern zu entnehmen. Bei diesem Verfahren werden zunächst die vorgefertigten Einzelleiter mit Hilfe von Kupplungsstücken lösbar miteinander verbunden und zu einer Endlosleitung zusammengefasst, welche beispielsweise auf einer Aufwickelvorrichtung aufgewickelt werden. Anschließend werden die Kupplungsstücke von den Einzelleitern wieder gelöst und in einer weiteren Einrichtung werden an den Enden Steckergehäuse befestigt und anschließend wird der Kabelsatz ausgebildet.

Aus der DE 38 20 638 C2 ist ein weiteres automatisiertes Verfahren zur Herstellung eines Kabelsatzes zu entnehmen. Hierbei werden vorgefertigte Leitungselemente mit Hilfe eines Industrieroboters in Steckergehäuse eingesetzt. Die Steckergehäuse sind dabei entlang einer Linie an einem vertikal orientierten Verlegebrett angebracht. Die Einzelleitungen zwischen zwei benachbarten Steckergehäusen hängen lose nach Unten herunter. Anschließend erfolgt noch ein Umwickeln, wobei hierzu der Industrieroboter einen Werkzeugwechsel vornimmt. In einer Ausführungsvariante sind die Steckergehäuse auf Drehtellern angeordnet, die entlang einer Linearführung verfahrbar sind. Nach dem Bestücken der Steckergehäuse verfahren die Drehteller mit den darauf angebrachten Steckergehäusen an eine vorgegebene Position.

Weitere Verfahren sowie Anlagen zur teilautomatiserten Herstellung von Kabelsätzen sind beispielsweise zu entnehmen aus US 2002/0144395 A1 oder EP 0 661 721 A1.

Ausgehend hiervon liegt der Erfindung die Aufgabe zugrunde, eine Anlage sowie ein Verfahren zum automatisierten Herstellen von derartigen Kabelsätzen mit verzweigter Struktur zu ermöglichen.

Die Aufgabe wird gemäß der Erfindung gelöst durch eine Anlage zum automatisierten Herstellen eines Kabelsatzes mit den Merkmalen des Anspruchs 1. Die Aufgabe wird weiterhin gelöst durch ein Verfahren zum automatisierten Herstellen eines derartigen Kabelsatzes mit den Merkmalen des Anspruchs 13. Die im Hinblick auf die Anlage angeführten Vorteile und bevorzugten Ausgestaltungen sind sinngemäß auch auf das Verfahren zu übertragen.

Die Anlage dient zur automatisierten Herstellung eines Kabelsatzes, welcher eine verzweigte Struktur aus mehreren einzelnen Leitungselementen aufweist. Die Anlage umfasst eine Steuereinheit zum Steuern der einzelnen Prozessabläufe der Anlage, eine Verteilstation zum Verteilen der Leitungselemente in einer vorgegebenen Verteilstruktur entsprechend der verzweigten Struktur des Kabelsatzes sowie ein zweites Transportsystem. Das zweite Transportsystem umfasst dabei ein zweites Schienensystem mit mehreren parallel zueinander orientierten zweiten Schienen, welche in einer ersten Richtung unabhängig voneinander und in Abhängigkeit der vorgegebenen verzweigten Struktur des Kabelsatzes verstellbar sind. Das zweite Transportsystem weist weiterhin mehrere zweite Transporter auf, die jeweils zur Aufnahme eines Leitungsendes eines jeweiligen Leitungselements ausgebildet sind. Die zweiten Transporter sind entlang der zweiten Schiene in einer zweiten Richtung verfahrbar. Im Betrieb werden die zweiten Transporter sowie die zweiten Schienen derart angesteuert, dass durch Verfahren der zweiten Schienen in die erste Richtung und durch Verfahren der zweiten Transporter entlang der zweiten Schienen und damit in der zweiten Richtung die gewünschte Verteilstruktur erzeugt wird. Da an den zweiten Transportern die jeweiligen Leitungsenden der einzelnen Leitungselemente angeordnet sind, wird hierdurch der aus den einzelnen Leitungselementen zusammengesetzte Kabelsatz durch das automatische Verfahren der zweiten Schienen sowie der zweiten Transporter quasi aufgespreizt. Dadurch ist kein individuelles Verlegen der einzelnen Leitungselemente entlang eines vorgesehenen Verlaufs erforderlich. Das Aufspreizen des Kabelsatzes und das Einnehmen der verzweigten Struktur des Kabelsatzes erfolgt also automatisch mithilfe des speziellen zweiten Transportsystems innerhalb der Verteilstation.

Allgemein wird durch das Verfahren der zweiten Transporter und der zweiten Schienen eine zweidimensionale Ebene aufgespannt, in der die einzelnen Transporter in ihren Endpositionen die gewünschte Verteilstruktur einnehmen.

In bevorzugter Ausgestaltung handelt es sich hierbei um eine Vertikalebene, das heißt die erste Richtung und die zweite Richtung spannen die Vertikalebene auf. Bei der ersten Richtung handelt es sich dabei insbesondere um eine Vertikalrichtung, das heißt die zweiten Schienen sind in vertikaler Richtung verfahrbar angeordnet. Korrespondierend handelt es sich bei der zweiten Richtung um eine Längsrichtung, die speziell in horizontaler Richtung verläuft. Der zu fertigende Kabelsatz wird daher insgesamt "hängend" ausgebildet.

Insgesamt dient die Anlage zur vollständigen automatischen Herstellung eines Kabelsatzes. Bei der Fertigung durchläuft hierzu der in der Verteilstation aufgespreizte Kabelsatz mehrere weitere zweite Bearbeitungsstationen, die sukzessive aufeinander folgen. In jeder dieser Bearbeitungsstationen wird ein Prozess- oder Fertigungsschritt ausgeführt, sodass der Kabelsatz sukzessive nach Art einer Fertigungsstraße ausgebildet wird. Die Anlage untergliedert sich dabei vorzugsweise in zwei Teile, wobei in einem ersten Teil der Anlage die einzelnen von dem jeweiligen Kabelsatz benötigten Leitungselemente individuell vorbereitet und speziell in einer Sammel- oder Pufferstation bereitgestellt werden. Aus dieser werden sie dann entnommen und für einen jeweilig zu fertigenden Kabelsatz zusammengesetzt und in die gewünschte verzweigte Struktur gebracht. Das Zusammenstellen der individuellen Leitungselemente und das Ausbilden des Kabelsatzes erfolgt im zweiten Teil der Anlage.

Ein besonderer Vorteil der Anlage ist darin zu sehen, dass durch die automatisierte Herstellung eines jeweiligen individuellen Kabelsatzes für jeden einzelnen Kabelsatz individuell die Anzahl und Art der Leitungselemente sowie die Konfiguration des Kabelsatz als solches vorgebbar ist. Die zweiten Transporter nehmen an der Verteilstation dann entsprechend des jeweiligen individuellen Kabelsatzes die Verteilstruktur ein. Über die Steuereinrichtung wird dabei jeweils vorgegeben, welche der zweiten Transporter für den jeweiligen individuellen Kabelsatz wie zu bestücken sind. Durch diese Maßnahme ist sowohl eine automatische Fertigung des Kabelsatzes bei gleichzeitig hohem Individualisierungsgrad des jeweiligen Kabelsatzes ermöglicht. Durch die vielen Prozessfreiheitsgrade bei der Fertigung ist die Anlage daher insgesamt in der Lage, aufeinanderfolgende Kabelsätze, die nacheinander hergestellt werden in unterschiedlichen Konfigurationen zusammen zu stellen und zu fertigen ohne dass ein manueller Eingriff erforderlich ist.

In zweckdienlicher Ausbildung weist die Anlage einen Manipulator auf, welcher zur insbesondere einzelweisen Aufnahme der Leitungselemente speziell aus der erwähnten Pufferstation und zum Bestücken der zweiten Transporter mit den aufgenommenen Leitungselementen ausgebildet ist. Bei dem Manipulator handelt es sich insbesondere um einen Roboter, speziell um einen Industrieroboter und allgemein um einen mehrachsigen Gelenkarmroboter. Dieser weist typischerweise Verstellmöglichkeiten in mehreren Freiheitsgraden auf, insbesondere in mehreren linearen Freiheitsgraden sowie in mehreren rotatorischen Freiheitsgraden. Der Manipulator weist insgesamt eine Roboterhand auf, die geeignet ausgebildet ist, um die einzelnen Leitungselemente aus der Bereitstellungsstation (Pufferstation) zu greifen und an den zweiten Transportern zu fixieren.

Zweckdienlicherweise ist zumindest ein Teil der zweiten Transporter mit Steckergehäusen bestückbar. Die Steckergehäuse sind dabei zur Aufnahme der Leitungsenden der Leitungselemente vorgesehen. Bei diesen Steckergehäusen handelt es sich um Steckergehäuse des endgefertigten Kabelsatzes. Insofern ist hier bereits eine Vorkonfektionierungsstufe verwirklicht. Über den Manipulator werden die üblicherweise mit Kontaktelementen vorbereiteten Leitungsenden in die Steckergehäuse eingesteckt oder eingelegt. Durch die Bestückung mit dem Manipulator ist hierbei eine hohe Prozesssicherheit gegeben. Speziell ist vorgesehen, dass beim Bestücken eine Prozessüberwachung, beispielsweise eine Positionsüberwachung und/oder eine Kraftüberwachung der Einsteckkraft ausgebildet ist.

Neben den Steckergehäusen sind die zweiten Transporter zweckdienlicherweise auch mit Umlenkelementen oder weiteren Halterungen ausgebildet beziehungsweise bestückt. Die Umlenkelemente dienen beispielsweise dazu, einzelne Leitungselemente an definierten Positionen der verzweigen Struktur umzubiegen, beispielsweise an Abzweigungen.

Die weiteren Halterungen dienen beispielsweise zur Aufnahme von Leitungsenden zweier Leitungselemente, die miteinander insbesondere stoffflüssig verbunden sind. Bei Kabelsätzen ist es teilweise erforderlich, dass Leitungselemente auf gleiches Bezugspotential gebracht werden und hierzu miteinander beispielsweise durch Schweißen verbunden werden. Die Halterungen dienen zur Aufnahme derartig verbundener Leitungsenden. Zweckdienlicherweise sind die zweiten Transporter jeweils mit den Steckergehäusen und/oder den Umlenkelementen bzw. den Halterungen bestückbar. Das bedeutet, dass diese temporär an den zweiten Transportern fixiert werden können. Um die einzelnen zweiten Transporter mit den Steckergehäusen, den Umlenkelementen oder den Haltern zu bestücken ist zweckdienlicherweise ein weiterer Manipulator angeordnet, der für dieses Bestücken geeignet ausgebildet ist.

Die zweiten Transporter werden bevorzugt allgemein entlang des zweiten Schienensystems im Kreislauf geführt. Zunächst werden die zweiten Transporter mit den für den jeweiligen Kabelsatz erforderlichen Steckergehäusen etc. bestückt, danach werden die Leitungselemente individuell an den Transportern befestigt und anschließend wird der zu fertigende Kabelsatz in die verzweigte Struktur aufgespreizt und automatisch endgefertigt. Am Ende wird der endgefertigte Kabelsatz von den zweiten Transportern abgenommen und diese werden wieder zurück geführt und erneut mit Steckergehäusen, Umlenkelementen etc. für den nächsten Kabelsatz bestückt.

Das Bestücken der zweiten Transporter mit den Leitungsenden der Leitungselemente erfolgt dabei insbesondere im Bereich einer sogenannten Steckerstation. An dieser Steckerstation ist der bereits erwähnte Manipulator angeordnet und die zweiten Transporter sind auf zweiten Schienen dieser Steckerstation bereit gestellt. Für diese Steckerstation werden dabei in Abhängigkeit des zu fertigenden Kabelsatzes genau eine definierte Anzahl an zweiten Transportern mit einer vorgegebenen Bestückung mit Steckergehäusen, Umlenkelementen oder Halterungen auf den zweiten Schienen bereit gestellt. Dabei sind mehrere parallel zueinander angeordnete zweite Schienen an der Steckerstation ausgebildet. Die einzelnen zweiten Transporter mit der kabelsatz-spezifischen Bestückung sind dabei auf diese mehreren zweiten Schienen verteilt angeordnet. Für jeden individuell zu fertigenden Kabelsatz wird daher zu Beginn der durch die zweiten Bearbeitungsstation gebildeten Fertigungsstraße die zweiten Transporter für den zu fertigenden Kabelsatz individuell bereit gestellt.

Im Hinblick auf eine möglichst hohe Prozessgeschwindigkeit ist die Anlage und die Steuereinrichtung dabei derart ausgebildet, dass im Betrieb, insbesondere an der Steckerstation die zweiten Transporter zum Bestücken mit den Leitungselementen in einem zusammengefahrenen Zustand bereit gestellt werden und aus diesem Zustand in die Verteilstruktur verfahren werden. Die zweiten Transporter sind daher zum Bestücken möglichst eng zusammengefasst. Dies bedeutet, dass die zweiten Transporter, die sich auf dergleichen Schiene befinden, weitgehend zusammen geschoben sind. Ergänzend sind auch die zweiten Schienen möglichst eng zusammen gefahren. Nach dem Bestücken nehmen die zweiten Transporter dann die Verteilstruktur ein.

Für die Fertigung eines Kabelsatzes sind typischerweise mehrere Bearbeitungsschritte erforderlich. Insbesondere müssen die Leitungselemente aneinander fixiert werden. Allgemein weist die Anlage daher mehrere zweite Bearbeitungsstationen auf, die unmittelbar aneinander anschließend angeordnet sind. Jede dieser zweiten Bearbeitungsstationen weist vorzugsweise mehrere zweite Schienen auf, die jeweils in der ersten Richtung, also insbesondere in der Vertikalrichtung individuell verfahrbar sind. In jeder zweiten Bearbeitungsstation kann daher die Verteilstruktur eingenommen werden. Speziell zum Fixieren der Leitungselemente aneinander ist es von Vorteil, wenn diese in der Verteilstruktur angeordnet sind, sodass die Fixierung beispielsweise an Abzweigstellen in geeigneter Weise erfolgen kann, sodass insbesondere formstabile Abzweigungen ausgebildet werden.

Die Steuereinrichtung ist weiterhin derart ausgebildet, dass die zweiten Schienen einander benachbarter zweiter Bearbeitungsstationen in Abhängigkeit der Verteilstruktur in eine zueinander fluchtende Ausrichtung gebracht werden. Die zweiten Schienen benachbarter Bearbeitungsstationen gehen dabei unmittelbar ineinander über, sodass die zweiten Transporter von der einen zu der anderen zweiten Schiene übergeben werden können.

In bevorzugter Ausgestaltung werden dabei die zweiten Transporter von der einen Bearbeitungsstation zur nachfolgenden Bearbeitungsstation unter Beibehaltung der eingenommenen Verteilstruktur der zweiten Transporter verfahren. Der aufgespreizte Kabelsatz wird dabei in dieser aufgespreizte Position zwischen den Bearbeitungsstationen verfahren.

In zweckdienlicher Ausgestaltung sind die zweiten Transporter allgemein individuell verfahrbar und individuell antreibbar. Hierdurch wird gewährleistet, dass über die zweiten Transporter zum einen die gewünschte Verteilstruktur individuell jeweils eingenommen werden kann.

Zweckdienlicherweise sind dabei die zweiten Transporter elektrisch oder magnetisch antreibbar. Der Antrieb erfolgt dabei beispielsweise nach Art eines Linearmotors. Bei einem magnetischen oder elektromagnetischen Antrieb ist dabei insbesondere vorgesehen, dass die zweiten Transporter über wechselnde Magnetfelder beispielsweise nach Art einer Schwebebahn angetrieben werden. Die zweiten Transporter werden allgemein nach Art von Schlitten entlang der zweiten Schienen geführt. Die einzelnen zweiten Transporter weisen dabei quasi jeweils eine eigene Antriebseinheit auf. Im Falle eines magnetischen Antriebs besteht diese Antriebseinheit im einfachsten Falle aus einem Permanentmagneten oder auch aus einem Elektromagneten. Entlang der zweiten Schienen sind dann Magnete verteilt, insbesondere Elektromagnete. An den zweiten Transportern sind korrespondierend hierzu ebenfalls Magnete, insbesondere Permanentmagnete angeordnet. Durch entsprechendes Umpolen der Elektromagnete wird ein fortlaufendes Magnetfeld erzeugt, welches die Transporter antreibt.

Die Anlage ist weiterhin - wie bereits erwähnt - zur Fixierung der Leitungselemente aneinander ausgebildet. Zur Fixierung ist hierzu insbesondere ein weiterer Manipulator bereitgestellt. Die Steuereinrichtung und die Anlage ist nun derart ausgebildet, dass die Fixierung der Leitungselemente während des Aufspreizen in die Verteilstruktur erfolgt. Hierdurch lassen sich hohe Taktraten erzielen. Der entsprechende Manipulator ist dabei in zweckdienlicher Weise verfahrbar angeordnet, sodass er insbesondere die Aufspreizbewegung nachfolgen kann.

Alternativ oder auch ergänzend dazu erfolgt auch die Fixierung oder eine weitere Fixierung der Leitungselemente nach dem Aufspreizen in die Verteilstruktur.

Ein Ausführungsbeispiel der Erfindung wird nachfolgend anhand der Figuren näher erläutert. Diese zeigen jeweils in teilweise stark vereinfachten Darstellungen:
- Figur 1: eine Frontansicht einer Anlage zum automatisierten Herstellen eines Kabelsatzes mit einem ersten sowie einen zweiten Teil,
- Figur 2: eine ausschnittsweise perspektivische Darstellung der Anlage im Bereich des ersten Teils zusammen mit einem Warenlager,
- Figur 3: eine ausschnittsweise perspektivische Darstellung der Anlage im Bereich des zweiten Teils,
- Figur 4: eine ausschnittsweise Ansicht im Bereich einer Steckerstation, an der mehrere zweite Transporter bereit gestellt sind,
- Figur 5: eine vegrößerte ausschnittsweise Darstellung im Übergangsbereich zwischen der Steckerstation und einer Verteilstation, in der die zweiten Transporter in eine Verteilstruktur überführt werden,
- Figur 6: eine stark vereinfachte Darstellung von zweiten Transportern mit daran angebrachten Leitungselementen, sowie
- Figur 7: eine Vorderansicht einer weiteren zweiten Bearbeitungsstation, in der die zweiten Transporter in der verteilten Struktur angeordnet sind und einen Kabelsatz halten.

In den Figuren sind gleichwirkende Teile mit den gleichen Bezugszeichen versehen.

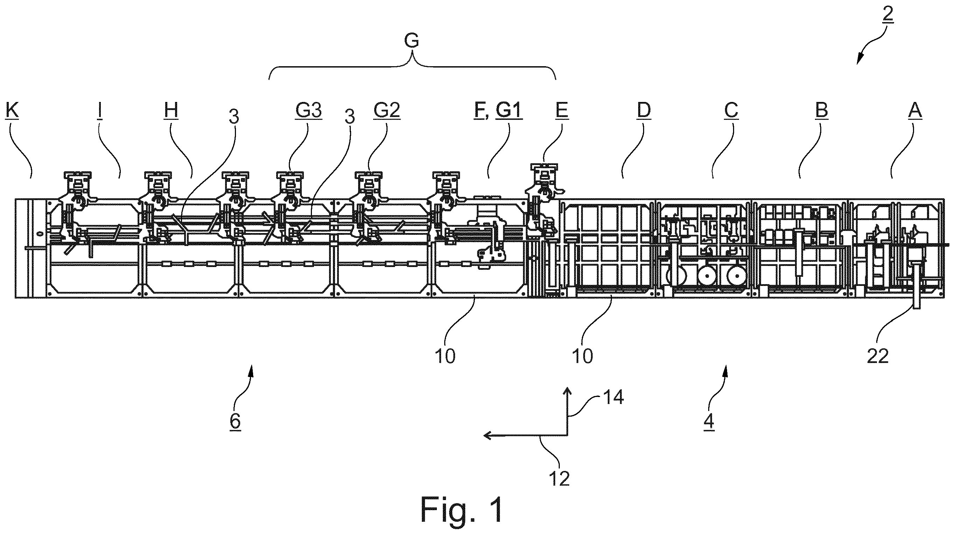

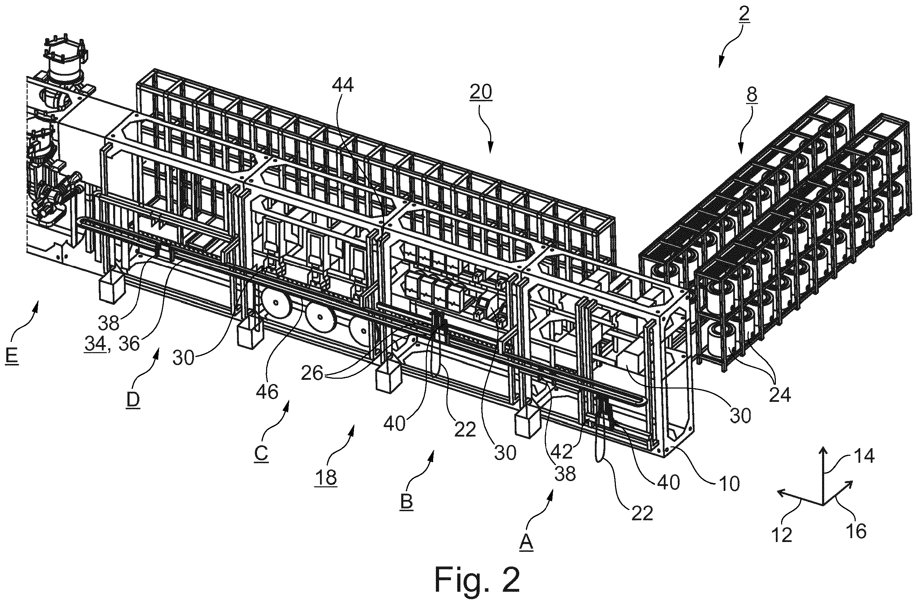

Die in den Figuren 1 bis 3 dargestellte Anlage 2 dient zum automatisierten Herstellen eines Kabelsatzes 3 und ist modular aus einer Vielzahl von einzelnen Bearbeitungsstationen aufgebaut. Die Anlage weist einen ersten Teil 4 mit ersten Bearbeitungsstationen A, B, C, D sowie einen zweiten Teil mit zweiten Bearbeitungsstationen E, F, G, H, I, K auf. Vor dem ersten Teil 4 ist noch ein Warenlager 8, welches nach Art eines Hochlagers ausgebildet ist, angeordnet. Die einzelnen Bearbeitungsstationen A bis K weisen jeweils ein Gerüst 10 auf, welches im Wesentlichen einen Gerüstrahmen definiert, innerhalb dessen im ersten Teil 4 Bearbeitungseinheiten zur Durchführung von unterschiedlichen Arbeitsschritten angeordnet sind. Die Gerüste 10 sind dabei unmittelbar aneinander angrenzend befestigt und bilden eine sich insbesondere linear erstreckende Gerüstanordnung. Die Gerüste 10 sind in einer Längsrichtung 12 aneinander angereiht. Die Gerüste 10 sind nach Art eines Regals aufgestellt. Sie erstrecken sich in die Höhe in einer Vertikalrichtung 14 und haben sich eine in eine Querrichtung 16 erstreckende Tiefe. Längsrichtung 12 und Vertikalrichtung 14 spannen eine Vertikalebene auf, zu der die Querrichtung 16 senkrecht orientiert ist. Im Ausführungsbeispiel ist das Warenlager 8 in Querrichtung 16 verlaufend angeordnet. Durch die Ausrichtung der Gerüste 10 in vertikaler Orientierung weist die gesamte Gerüstanordnung eine Vorderseite 18 sowie eine Rückseite 20 auf.

Bei der Fertigung des Kabelsatzes 3 wird die Anlage 2 in Längsrichtung 12 von der ersten Bearbeitungsstation A sukzessive bis zur letzten Bearbeitungsstation L durchlaufen. Im Ausführungsbeispiel der dargestellten modularen Anlage 2 sind dabei folgende Bearbeitungsstationen vorgesehen:
Eine Schneidstation A, eine Abisolierstation B, eine Kontaktierungsstation C, eine Pufferstation D. Der zweite Teil 6 beginnt mit einer Steckerstation E, gefolgt von einer Verteilstation F, einer mehrteiligen Fixierstation G, die im Ausführungsbeispiel drei Teilstationen G1, G2, G3 aufweist, weiter gefolgt von einer Clipstation H, einer Verpackungsstation I sowie einer End- oder Sammelstation K.

Im ersten Teil 4 der Anlage 2 werden zunächst Leitungselemente 22 aufbereitet. Bei diesen handelt es sich insbesondere um Adern oder auch um verdrillte Adern. Sie werden als Meterware über Spulen 24 bereitgestellt. Die Spulen 24 sind im Warenlager 8 bevorratet.

Im zweiten Teil 6 werden die einzelnen vorbereiteten Leitungselemente 22 zum Kabelsatz 3 zusammengestellt. All dies erfolgt vollautomatisiert ohne manuellen Eingriff. Die Leitungselemente 22 in den einzelnen Vorfertigungsstufen werden innerhalb des ersten Teils 4 mit Hilfe eines ersten Transportsystems 26 jeweils zwischen den einzelnen ersten Bearbeitungsstationen A bis D weitergefördert.

Im zweiten Teil 6, in dem die Zusammenstellung des Kabelsatzes 3 aus den einzelnen Leitungselementen 22 erfolgt, werden die jeweiligen Kabelsätze in ihren unterschiedlichen Vorfertigungsstufen mit Hilfe eines zweiten Transportsystems 28 sukzessive den einzelnen Bearbeitungsstationen E bis J des zweiten Teils 6 zugeführt.

Die einzelnen Bearbeitungsschritte im ersten Teil 4 werden mit Hilfe von Bearbeitungseinheiten 30 ausgeführt, die innerhalb des jeweiligen Gerüsts 10 der jeweiligen ersten Bearbeitungsstation A bis D angeordnet sind.

Im zweiten Teil 6 werden die einzelnen erforderlichen Arbeitsschritte durch Manipulatoren 32 durchgeführt, welche im Ausführungsbeispiel als mehrachsige Gelenkarmroboter ausgeführt sind. Hierbei ist jeder einzelnen Bearbeitungsstation E bis I jeweils ein eigener Manipulator 32 zugeordnet. Die einzelnen Manipulatoren 32 sind dabei in Längsrichtung 12 verfahrbar angeordnet. Im Ausführungsbeispiel sind sie hängend an einer hier nicht näher dargestellten Deckenschiene befestigt.

Wie nachfolgend noch näher beschrieben wird, wird zur Fertigung des Kabelsatzes 3 im zweiten Teil 6 der Kabelsatz 3 entsprechend einer gewünschten späteren verzweigten Struktur aufgespreizt. Der Kabelsatz 3 ist daher in einer zweidimensionalen Ebene aufgespreizt. Diese ist vertikal ausgerichtet, liegt also in der zuvor beschriebenen Vertikalebene. Die Kabelsätze 3 sind dabei an einer Frontseite des Gerüsts 10 angeordnet. Mittels der Manipulatoren 32 erfolgt die Bearbeitung daher an der Vorderseite 18 der Gerüste 10.

Bei der automatisierten Fertigung des Kabelsatzes 3 werden bei der im Ausführungsbeispiel dargestellten Anlage 2 folgende Fertigungsschritte sukzessive und automatisch durchlaufen:
Im Warenlager 8 werden mehrere Spulen 24 bevorratet, auf denen Leitungselemente 22 unterschiedlicher Typen als Endlos-Ware aufgespult sind. Die einzelnen Typen der Leitungselemente 22 unterscheiden sich insbesondere im Hinblick auf ihre Querschnitte, insbesondere Querschnitte der Leiter, Farbe der Aderisolierung oder auch dadurch, ob es sich um eine Einzelader oder ein insbesondere verdrilltes Aderpaar handelt.

Innerhalb der Schneidstation A werden die von den Spulen 24 abgewickelten Leitungselemente 22 unterschiedlichen Typs auf die jeweils für den zu fertigenden Kabelsatz 3 benötigte Länge abgelängt.

In der Abisolierstation B werden anschließend mittels entsprechender AbisolierEinheiten als Bearbeitungseinheiten 30 Leitungsenden der Leitungselemente 22 abisoliert.

In der Kontaktierungsstation C werden Kontaktelemente, beispielsweise Kontaktbuchsen oder Kontaktstifte endseitig an den freigelegten Leitungsenden also am jeweiligen Leiter des Leitungselements 22 befestigt. Dies erfolgt beispielsweise durch einen Crimpprozess.

Die vorbereiteten Leitungselemente 22 werden in der Pufferstation D gesammelt. In der Pufferstation D befindet sich daher nach Art eines Zwischenlagers eine Vielzahl von Leitungselementen 22, die sich im Hinblick auf ihren Typ und/oder ihre Länge unterscheiden.

Das erste Transportsystem 26 dient jeweils zum Transportieren der Leitungselemente 22 zwischen den einzelnen Bearbeitungsstationen A bis D. Es weist ein erstes Schienensystem 34 auf. Dieses umfasst dabei eine umlaufende Führungsschiene 36, auf der einzelne, individuell verfahrbare erste Transporter 38 angeordnet sind. Bei diesen ersten Transportern 38 handelt es sich um nach Art von Schlitten entlang der Führungsschiene 36 verfahrbaren Trägereinheiten. Diese sind jeweils zur insbesondere hängenden Aufnahme ein oder mehrere Leitungselemente ausgebildet. Die Übergabe von bzw. an eine jeweilige Bearbeitungsstation A bis D zu diesen ersten Transportern 38 erfolgt mit Hilfe von Positioniereinheiten 40, die entlang von Querschienen 42 in Längsrichtung 12 verfahrbar sind. Die Querschienen 42 wiederum sind in Vertikalrichtung entlang von Vertikalschienen 44 verschiebbar.

Das erste Schienensystem 34 setzt sich allgemein aus einer Vielzahl von ersten Schienen 46 zusammen. Eine jeweilige erste Schiene 46 ist dabei einem jeweiligen Gerüst 10 zugeordnet und weist insbesondere dessen Länge auf. Das erste Schienensystem 34 ist daher korrespondierend zu der Gerüstanordnung ebenfalls modular aufgebaut. Die ersten Schienen 46 benachbarter Bearbeitungsstationen fluchten miteinander zur Ausbildung der umlaufenden Führungsschiene.

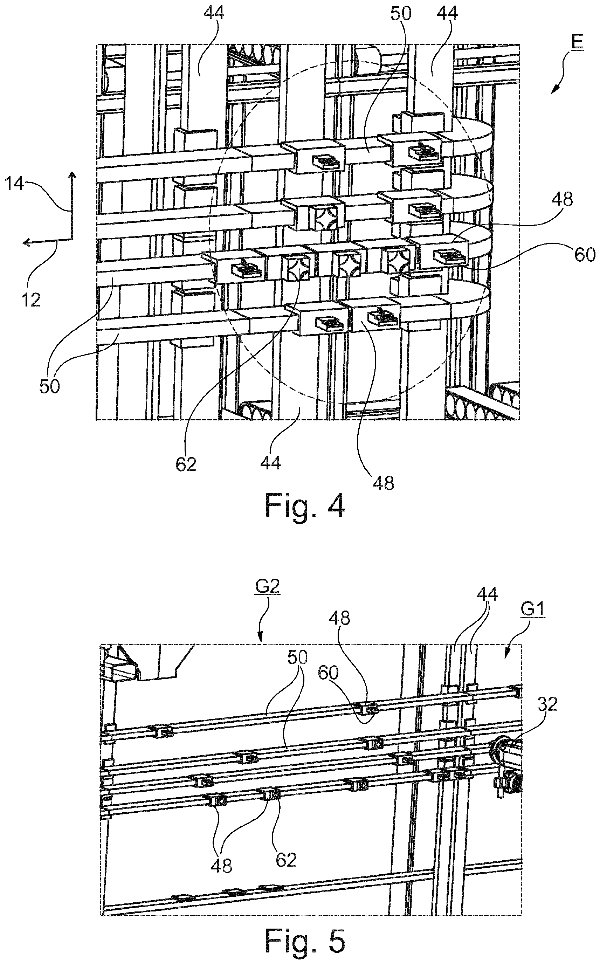

In der Steckerstation E werden zweite Transporter 48 des zweiten Transportsystems 28 mit den Leitungselementen 22 bestückt. Zumindest ein Teil der zweiten Transporter 48 ist hierzu mit Steckergehäusen 60 bestückt (vgl. Fig 4). In diese werden die an den Leitungsenden der Leitungselemente 22 angeschlagenen Kontaktelemente eingelegt. Einige der zweiten Transporter 48 können auch mit Halter zur Aufnahme von miteinander verbundenen Leitungsenden zweier Leitungselemente 22 versehen oder bestückt sein. Schließlich sind einige der zweiten Transporter zum Führen oder Umlenken von Leitungselementen 22 ausgebildet bzw. mit entsprechenden Umlenkelementen oder Haltern bestückt.

Von besonderer Bedeutung innerhalb der Steckerstation E ist, dass die zweiten Transporter 48 auf mehrere zweite Schienen 50 des zweiten Transportsystems 28 verteilt werden. Die zweiten Schienen 50 sind dabei parallel zueinander angeordnet. Die einzelnen Leitungsenden der Leitungselemente 22 werden in geeigneter Weise an jeweils einem zweiten Transporter 48 fixiert, die verteilt über die zweiten Schienen 50 angeordnet sind. Es werden dabei in der Steckerstation E sämtliche für den zu fertigenden Kabelsatz 3 benötigten Leitungselemente 22 aus der Pufferstation D entnommen und an die zweiten Transporter 48 befestigt. Dies erfolgt mit Hilfe des der Steckerstation E zugeordneten Manipulators 32.

Bei der Steckerstation E handelt es sich um eine vergleichsweise schmale Station. An dieser sind die zweiten Transporter 48 vorzugsweise jeweils eng beieinander angeordnet. Die parallel zueinander angeordneten zweiten Schienen 50 sind vorzugsweise unmittelbar nebeneinander angeordnet.

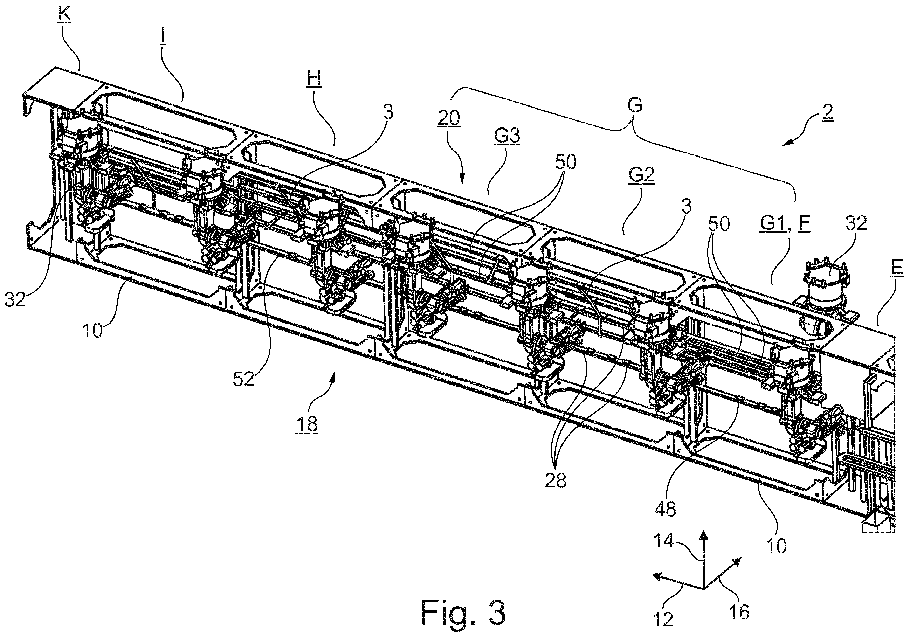

Die mit den Leitungselementen 22 bestückten zweiten Transporter 48 werden auf weitere zweite Schienen 50 in der Verteilstation F überführt. In der Verteilstation F erfolgt ein Verteilen der zweiten Transporter 48 und damit der Leitungsenden der Leitungselemente 22 in die durch den Kabelsatz 3 vorgegebene verzweigte Struktur. Die einzelnen zweiten Transporter 48 nehmen daher innerhalb der Vertikalebene eine Verteilstruktur entsprechend der verzweigten Struktur des Kabelsatzes 3 ein. Hierzu werden die zweiten Transporter 48 auf ihrer jeweiligen zweiten Schiene 50 in Längsrichtung 12 an eine vordefinierte Position verfahren. Gleichzeitig werden die parallel zueinander angeordneten zweiten Schienen 50 in Vertikalrichtung 14 auseinandergezogen, so dass sich die gewünschte verzweigte Struktur ergibt. Bei der Darstellung der Fig. 3 ist noch eine Zwischensituation dargestellt, bei der innerhalb der Verteilstation F noch nicht die vollständige Verteilerstruktur eingenommen ist. Die Verteilerstruktur ist an den nachfolgenden Bearbeitungsstationen zu erkennen.

Das Aufspreizen der zweiten Schienen 50 sowie das Verfahren der zweiten Transporter 48 in Längsrichtung an ihre vorgegebene Längsposition braucht nicht zwingend in der Verteilstation F abgeschlossen zu sein. Dies kann beispielsweise auch noch zumindest teilweise in der nachfolgenden Fixierstation G erfolgen.

In der Fixierstation G werden die einzelnen Leitungselemente aneinander fixiert, speziell um die vorgegebene verzweigte Struktur zu fixieren, also eine gewisse Stabilität zu verleihen. Hierzu sind zweckdienlicherweise mehrere Teilstationen G1, G2, G3 vorgesehen, die beispielsweise für unterschiedliche Fixermethoden ausgebildet sind.

Wie anhand der Figen 1, 3 zu erkennen ist sind die Verteilstation F sowie die erste Fixierstation G1 miteinander kombiniert, teilen sich daher gemeinsam ein Gerüst 10.

In der Clipstation werden bei Bedarf (Befestigungs-) Clips angebracht. Diese werden typischerweise mittels einer Bandierung am Kabelsatz 3 befestigt.

Die Verpackungsstation I dient zur Entnahme des endgefertigten Kabelsatzes 3 und zum Weitertransport desselben. Hierzu wird der Kabelsatz 3 mit Hilfe des zugeordneten Manipulators 32 von den zweiten Schienen 50 genommen.

In der Sammelstation K werden die einzelnen zweiten Transporter 48 gesammelt und einer gemeinsamen Rückführschiene 52 zugeführt. Diese verläuft an der Rückseite 20 und erstreckt sich bis zur Steckerstation E. An dieser werden die zweiten Transporter 48 mit Hilfe eines an der Rückseite 20 angeordneten Manipulators 32 wieder in geeigneter Weise mit Steckergehäusen 60 bestückt und somit für die Fertigung des nächsten Kabelsatzes 3 vorbereitet.

Das zweite Transportsystem 28 weist die zuvor beschriebenen zweiten Schienen 50 und die zweiten Transporter 48 auf. Die zweiten Transporter 48 sind vergleichbar wie die ersten Transporter 38 nach Art von entlang der Schienen 50 verfahrbaren Schlitten angeordnet. Die einzelnen zweiten Transporter 48 sind individuell verfahrbar und weisen ein elektromagnetisches Antriebssystem auf. Die zweiten Schienen 50 sind jeweils in Vertikalrichtung 40 verfahrbar. Jede Bearbeitungsstation E bis I weist dabei eine Anzahl von zweiten Schienen 50 auf, die parallel zueinander angeordnet sind. Die zweiten Schienen 50 erstrecken sich jeweils lediglich über die Länge eines jeweiligen Gerüsts 10 einer jeweiligen Bearbeitungsstation E bis I. Zur Übergabe der zweiten Transporter 48 zwischen benachbarten Bearbeitungsstationen werden die zweiten Schienen 50 in eine fluchtende Anordnung gebracht.

Figur 4 zeigt eine vergrößerte Darstellung im Übergangsbereich zwischen der Steckerstation E und der Verteilstation F. Es sind hierbei jeweils die zweiten Schienen 50 der Steckerstation E als auch der Verteilstation F zu erkennen. Die zweiten Schienen 50 fluchten dabei jeweils miteinander. Im gezeigten Ausführungsbeispiel sind insgesamt pro Bearbeitungsstation E, F vier zweite Schienen 50 angeordnet. Diese sind jeweils entlang der Vertikalschienen 44 in Vertikalrichtung 14 individuell verfahrbar angeordnet.

An den zweiten Schienen 50 sind dabei mehrere zweite Transporter 48 angeordnet, die über die mehreren zweiten Schienen 50 verteilt angeordnet sind.

Die einzelnen zweiten Transporter 48 sind dabei mit unterschiedlichen Elementen bestückt, insbesondere mit den Steckergehäusen 60 sowie mit Umlenkelementen 62. Die einzelnen zweiten Transporter 50 sind dabei insgesamt in einer möglichst dichten Anordnung zueinander angeordnet. Zum einen sind die zweiten Schienen 50 soweit wie möglich zusammengefahren. Gleichzeitig sind die einzelnen zweiten Transporter 48 auf den jeweiligen zweiten Schienen 50 mit geringem oder gar keinem Abstand zueinander angeordnet. In dieser in der Figur 4 dargestellten Position werden die zweiten Transporter 48, insbesondere die daran befestigten Steckergehäuse 60 sowie Umlenkelemente 62, mit den Leitungselementen 22 bestückt. Hierzu wird der Manipulator 32 herangezogen, welcher der Steckerstation E zugeordnet ist. In die Steckergehäuse 60 werden dabei die vorbereiteten Leitungsenden der Leitungselemente 22 eingeführt. Die Leitungsenden sind dabei typischerweise mit Kontaktelementen, beispielsweise Krimpelementen, vorkonfiguriert.

Aus der Steckerstation E werden nachfolgend die zweiten Transporter 48 auf die zweiten Schienen 50 der nachfolgenden Verteilstation F überführt. In der Verteilstation F erfolgt dann das "Aufspreizen" in die gewünschte Verteilstruktur des Kabelsatzes. Hierbei werden die einzelnen zweiten Transporter 48 in Längsrichtung 12 entlang ihrer jeweiligen zweiten Schiene 50 auseinander gezogen. Gleichzeitig werden auch die zweiten Schienen 50 in Vertikalrichtung 14 auseinander gezogen. Am Ende nehmen die zweiten Transporter 48 eine beispielsweise in der Figur 5 dargestellte Verteilstruktur ein. Figur 5 zeigt dabei ein Ansicht beispielsweise auf eine der Fixierstationen G1, G2, G3 oder auch auf die kombinierte Verteilstation F / Fixierstation G1. Bei der Figur 4 sowie auch der Figur 5 sind die Leitungselemente 22 nicht dargestellt.

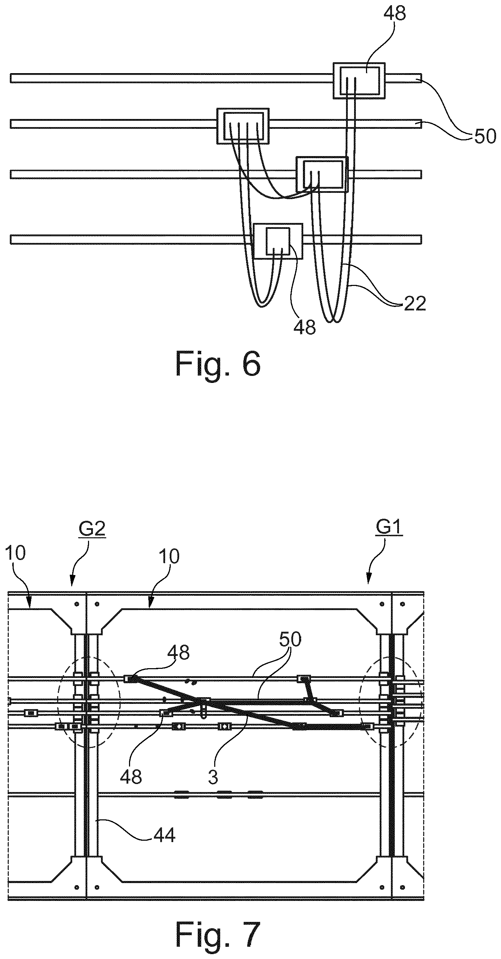

Die Leitungselemente 22 sind beispielhaft lediglich in der Figur 6 illustriert. Gut zu erkennen ist hierbei, dass die einzelnen Leitungselemente 22 mit ihrem Leitungsenden jeweils an den zweiten Transportern 48 befestigt sind. Aufgrund der vertikalen Anordnung der gesamten Anlage und der Gerüste 10 hängen die einzelnen Leitungselemente 22 an den zweiten Transportern 48. Da sie jeweils mit ihrem Leitungsenden gehalten sind, ist jedes der Leitungselemente dabei in etwa U-förmig hängend angeordnet. Die Figur 6 zeigt dabei eine Situation im Bereich der Steckerstation E, bei der also die einzelnen zweiten Transporter 48 eng beieinander und noch nicht in der angestrebten Verteilstruktur angeordnet sind.

Figur 7 zeigt eine Ansicht auf eine der zweiten Bearbeitungsstationen, beispielsweise eine der Fixierstationen G1, G2, G3 mit dem Kabelsatz 3 in der verzweigten Struktur. Gut zu erkennen ist die fluchtende Ausrichtung der zweiten Schienen 50 der Bearbeitungsstation, in der der Kabelsatz 3 aktuell gehalten ist und der nachfolgenden Bearbeitungsstation (linke Bildhälfte). Sobald der Kabelsatz 3 in der Bearbeitungsstation bearbeitet wurde, wird er in der aufgespreizten Struktur, also in der Verteilstruktur der zweiten Transporter 48, an die nachfolgende zweite Bearbeitungsstation, beispielsweise eine weitere Fixierstation G2 unter Beibehaltung der verzweigten Struktur übergeben.

Von besonderer Bedeutung der hier beschriebenen Anlage 2 ist die Tatsache, dass die einzelnen zweiten Transporter 48 individuell antreibbar sind und somit jeweils auf der jeweiligen zweiten Schiene eine individuelle Position einnehmen können. Gleichzeitig ist auch jede der zweiten Schienen 50 einer jeden zweiten Bearbeitungsstation individuell verfahrbar, sodass die Abstände zwischen zwei in Vertikalrichtung 14 benachbarter zweiter Schienen 50 frei einstellbar ist.

Hierdurch besteht die Möglichkeit, für jeden zu fertigenden Kabelsatz eine individuelle Verteilstruktur vorzugeben und entsprechend auch einzunehmen. Insgesamt ist dadurch die automatisierte Herstellung von individuellen Kabelsätzen mit unterschiedlichen verzweigten Strukturen ermöglicht. Über die hier nicht näher dargestellte Steuereinrichtung wird die gewünschte Verteilstruktur sowie die Auswahl der geforderten Leitungselemente, Steckergehäuse etc. vorgegeben.

### Bezugszeichenliste

- 2: Anlage
- 3: Kabelsatz
- 4: erster Teil
- 6: zweiter Teil
- 8: Warenlager
- 10: Gerüst
- 12: Längsrichtung
- 14: Vertikalrichtung
- 16: Querrichtung
- 18: Vorderseite
- 20: Rückseite
- 22: Leitungselement
- 24: Spulen
- 26: erstes Transportsystem
- 28: zweites Transportsystem
- 30: Bearbeitungseinheiten
- 32: Manipulator
- 34: erstes Schienensystem
- 36: Führungsschiene
- 38: erste Transporter
- 40: Positioniereinheit
- 42: Querschiene
- 44: Vertikalschiene
- 46: erste Schienen
- 48: zweite Transporter
- 50: zweite Schienen
- 52: gemeinsame Rückführschiene
- 60: Steckergehäuse
- 62: Umlenkelement
- A: Schneidstation
- B: Abisolierstation
- C: Kontaktierungsstation
- D: Pufferstation
- E: Steckerstation
- F: Verteilstation
- G (G1, G2, G3): Fixierstation
- H: Clipstation
- I: Verpackungsstation
- K: Sammelstation

## Patentansprüche

1. Anlage (2) zum automatisierten Herstellen eines Kabelsatzes (3), welcher eine verzweigte Struktur und mehrere einzelne Leitungselemente (22) aufweist, wobei die Anlage (2) aufweist
- eine Steuereinheit zum Steuern der Anlage (2)
- eine Verteilstation (F) zum Verteilen der Leitungselemente (22) in eine vorgegebenen Verteilstruktur entsprechend der verzweigten Struktur des Kabelsatzes(3)
- ein zweites Transportsystem (28) mit
-- einem zweiten Schienensystem mit mehreren parallel zueinander orientierten zweiten Schienen (50), welche in einer ersten Richtung (14) unabhängig voneinander und in Abhängigkeit der vorgegebenen verzweigten Struktur des Kabelsatzes (3) verstellbar sind sowie mit
-- mehreren zweiten Transportern (48), die jeweils zur Aufnahme eines Leitungsendes eines jeweiligen Leitungselements (22) ausgebildet sind und die entlang der zweiten Schienen (50) in einer zweiten Richtung (12) verfahrbar sind, wobei durch Verfahren der zweiten Schienen (50) in die erste Richtung (14) und durch Verfahren der zweiten Transporter (28) entlang der zweiten Schienen (50) die gewünschte Verteilstruktur erzeugbar ist, wobei mehrere aneinander anschließende zweite Bearbeitungsstationen angeordnet sind und jede der zweiten Bearbeitungsstationen mehrere zweite Schienen (50) aufweist, die jeweils in der ersten Richtung (14) individuell verfahrbar sind, **dadurch gekennzeichnet, dass**
die Steuereinheit derart ausgebildet ist, dass die zweiten Schienen (50) einander benachbarter zweiter Bearbeitungsstationen in Abhängigkeit der Verteilstruktur und zur Übergabe der zweiten Transporter in zueinander fluchtende Ausrichtung gebracht werden.

2. Anlage (2) nach dem vorhergehenden Anspruch, bei der die erste Richtung (14) und die zweite Richtung (12) eine Vertikalebene aufspannen, innerhalb der die zweiten Transporter (48) verfahrbar sind.

3. Anlage (2) nach einem der vorhergehenden Ansprüche, bei der ein Manipulator (32) angeordnet ist, welcher zum Bestücken der zweiten Transporter (28) mit den aufgenommenen Leitungselementen (22) ausgebildet ist.

4. Anlage (2) nach einem der vorhergehenden Ansprüche, bei der zumindest ein Teil der zweiten Transporter (48) mit Steckergehäusen (60) bestückbar sind, die zur Aufnahme der Leitungsenden der Leitungselemente (22) dienen.

5. Anlage (2) nach dem vorhergehenden Anspruch, bei der ein weiterer Manipulator (32) angeordnet ist, welcher zum jeweiligen Bestücken der zweiten Transporter (48) mit den Steckergehäusen (60) ausgebildet ist.

6. Anlage (2) nach einem der Ansprüche 3 bis 5, bei der eine Steckerstation (E) vorgesehen ist, die zum Bestücken der zweiten Transporter (28) mit den Leitungsenden der Leitungselementen (22) ausgebildet ist, wobei an der Steckerstation (E) der Manipulator (32) angeordnet ist und die zweiten Transporter (28) auf zweiten Schienen (50) der Steckerstation (E) bereitgestellt sind.

7. Anlage (2) nach dem vorhergehenden Anspruch, bei der die Steuereinheit derart ausgebildet ist, dass an der Steckerstation (E) in Abhängigkeit des zu fertigenden Kabelsatzes eine definierte Anzahl an zweiten Transportern (28) mit einer vorgegebenen Bestückung mit Steckergehäusen (60) auf den zweiten Schienen (50) bereitgestellt ist

8. Anlage (2) nach einem der vorhergehenden Ansprüche, bei der die Steuereinheit derart ausgebildet ist, dass im Betrieb die zweiten Transporter (28) zum Bestücken mit den Leitungselementen (22) in einem zusammengefahrenen Zustand bereitgestellt werden und aus diesem Zustand in die Verteilstruktur verfahren werden.

9. Anlage (2) nach einem der beiden vorhergehenden Ansprüche, bei der die Steuereinheit derart eingerichtet ist, dass die zweiten Transporter (28) im Betrieb unter Beibehaltung der Verteilstruktur von der einen zur nachfolgenden Bearbeitungsstationen verfahren werden.

10. Anlage (2) nach einem der vorhergehenden Ansprüche, bei der die zweiten Transporter (28) individuell verfahrbar sind.

11. Anlage (2) nach dem vorhergehenden Anspruch, bei der die zweiten Transporter (28) elektrisch oder magnetisch antreibbar sind.

12. Anlage (2) nach einem der vorhergehenden Ansprüche, bei der ein Manipulator zur Fixierung der Leitungselemente (22) aneinander bereitgestellt ist und die Steuereinrichtung derart eingerichtet ist, dass die Fixierung der Leitungselemente (22) während des Aufspreizens in die Verteilstruktur erfolgt.

13. Verfahren zum automatisierten Herstellen eines Kabelsatzes (3), welcher eine verzweigte Struktur und mehrere einzelne Leitungselemente (22) aufweist, wobei
die Leitungselemente (22) automatisch in eine vorgegebene Verteilstruktur entsprechend der verzeigten Struktur des Kabelsatzes (3) verteilt werden, wobei hierzu mehrere parallel zueinander orientierten zweite Schienen (50) sowie mehrere auf den zweiten Schienen (50) verteilte zweite Transporter (28) verwendet werden, und wobei die zweiten Transporter (28) mit jeweils einem Leitungsende der Leitungselemente (22) bestückt werden und anschließend zur Ausbildung der Verteilstruktur die zweiten Schienen (50) in einer ersten Richtung (14) und die zweiten Transporter (28) entlang der zweiten Schienen (50) in einer zweiten Richtung (12) verfahren werden, wobei mehrere aneinander anschließende zweite Bearbeitungsstationen angeordnet sind und jede der zweiten Bearbeitungsstationen mehrere zweite Schienen (50) aufweist, die jeweils in der ersten Richtung (14) individuell verfahrbar sind und **dadurch gekennzeichnet, dass**
die zweiten Schienen (50) einander benachbarter zweiter Bearbeitungsstationen in Abhängigkeit der Verteilstruktur und zur Übergabe der zweiten Transporter in zueinander fluchtende Ausrichtung gebracht werden.

## Claims

1. Plant (2) for the automated manufacture of a cable harness (3), which comprises a branched structure and a plurality of individual line elements (22), wherein the plant (2) comprises
- a control unit to for controlling the system (2)
- a distribution station (F) for distributing the line elements (22) into a predetermined distribution structure according to the branched structure of the cable harness (3)
- a second rail system (28) with
- a second rail system with a plurality of second rails (50) oriented in parallel to each other, which are adjustable in a first direction (14) independently of each other and depending on the predetermined branched structure of the cable harness (3), and with
- a plurality of second transporters (48), each of which is designed to receive a line end of a respective line element (22) and which are movable along the second rails (50) in a second direction (12), wherein it possible to produce the desired distribution structure by moving the second rails (50) in the first direction (14) and by moving the second transporters (28) along the second rails (50), wherein
a plurality of adjacent second processing stations are arranged and each of the second processing stations comprises a plurality of second rails (50), which are individually movable in the first direction (14), **characterized in that** the control unit is designed in such a way that the second rails (50) of adjacent second processing stations depending on the distribution structure and for transfer of the second transporters are brought into aligned orientation with respect to each another.

2. Plant (2) according to the preceding claim, wherein the first direction (14) and the second direction (12) span a vertical plane, within which the second transporters (48) are movable.

3. Plant (2) according to one of the preceding claims, wherein a manipulator (32) is arranged, which is designed to fit the second transporters (28) with the received line elements (22).

4. Plant (2) according to one of the preceding claims, wherein at least a part of the second transporters (48) can be fitted with plug housings (60), which serve for receiving the line ends of the line elements (22).

5. Plant (2) according to the preceding claim, wherein a further manipulator (32) is arranged, which is designed for the respective fitting of the second transporters (48) with the plug housings (60).

6. Plant (2) according to one of claims 3 to 5, wherein a plug station (E) is provided, which is designed for the fitting of the second transporters (28) with the line ends of the line elements (22), wherein the manipulator (32) is arranged at the plug station (E) and the second transporters (28) are provided on second rails (50) of the plug station (E).

7. Plant (2) according to the preceding claim, in which the control unit is designed in such a way that, at the plug station (E) depending on the cable harness to be manufactured, a defined number of second transporters (28) with a predetermined fitting with plug housings (60) is provided on the second rails (50).

8. Plant (2) according to one of the preceding claims, wherein the control unit is designed in such a way that during operation the second transporters (28) are provided for fitting with the line elements (22) in a pushed-together state and are moved from this state into the distribution structure.

9. Plant (2) according to one of the two preceding claims, in which the control unit is configured in such a way that during operation the second transporters (28) are moved from one to the following processing stations while maintaining the distribution structure.

10. Plant (2) according to one of the preceding claims, in which the second transporters (28) are individually movable.

11. Plant (2) according to the preceding claims, in which the second transporters (28) are electrically or magnetically drivable.

12. Plant (2) according to one of the preceding claims, in which a manipulator for fixing the line elements (22) to each other is provided and the control device is configured in such a way that the line elements (22) are fixed during expansion into the distribution structure.

13. Method for the automated manufacture of a cable harness (3), which comprises a branched structure and a plurality of individual line elements (22), wherein
the line elements (22) are automatically distributed into a predetermined distribution structure according to the branched structure of the cable harness (3), wherein for this purpose a plurality of second rails (50) oriented in parallel to each other and a plurality of second transporters (28) distributed on the second rails (50) are used, and wherein the second transporters (28) are each fitted with a respective line end of the line elements (22) and subsequently, in order to form the distribution structure, the second rails (50) are moved in a first direction (14) and the second transporters (28) are moved along the second rails (50) in a second direction (12), wherein a plurality of adjacent second processing stations are arranged and each of the second processing stations comprises a plurality of second rails (50), which are individually movable in the first direction (14) and **characterised in that**
the second rails (50) of adjacent second processing stations depending on the distribution structure and for the transfer of the second transporters are brought into aligned orientation with each other.

## Revendications

1. Installation (2) pour la fabrication automatisée d'un faisceau de câbles (3), ledit faisceau de câbles (3) comprenant une structure ramifiée et une pluralité d'éléments de ligne individuels (22), dans laquelle l'installation (2) comprend
- une unité de contrôle du système (2)
- une station de distribution (F) pour distribuer les éléments de ligne (22) dans une structure de distribution prédéterminée selon la structure ramifiée du faisceau de câbles (3)
- un deuxième système de transport (28) avec
- un deuxième système de rails avec une pluralité de deuxièmes rails (50) orientés parallèlement les uns aux autres, qui sont réglables dans une première direction (14) indépendamment les uns des autres et en fonction de la structure ramifiée prédéterminée du faisceau de câbles (3), et avec
- une pluralité de deuxièmes transporteurs (48), chacun d'entre eux étant conçu pour recevoir une extrémité de ligne d'un élément de ligne respectif (22) et pouvant être déplacé le long des deuxièmes rails (50) dans une deuxième direction (12), dans laquelle en déplaçant les deuxièmes rails (50) dans la première direction (14) et en déplaçant les deuxièmes transporteurs (28) le long des deuxièmes rails (50) la structure de distribution souhaitée peut être réalisée, dans laquelle
une pluralité de deuxièmes stations de traitement adjacentes sont disposées et chacune des deuxièmes stations de traitement comprend une pluralité de deuxièmes rails (50), qui peuvent chacun être déplacés individuellement dans la première direction (14), **caractérisée en ce que** l'unité de commande est conçue de telle sorte que les deuxièmes rails (50) des deuxièmes postes de traitement adjacents en fonction de la structure de distribution et pour le transfert des deuxièmes transporteurs sont mis en alignement les uns par rapport aux autres.

2. Installation (2) selon la revendication précédente, dans laquelle la première direction (14) et la deuxième direction (12) définissent un plan vertical, dans lequel les deuxièmes transporteurs (48) sont mobiles.

3. Installation (2) selon l'une des revendications précédentes, dans laquelle est disposé un manipulateur (32), qui est conçu pour équiper les deuxièmes transporteurs (28) avec les éléments de ligne reçus (22).

4. Installation (2) selon l'une des revendications précédentes, dans laquelle au moins une partie des deuxièmes transporteurs (48) peut être équipée avec des boîtiers de connecteur (60), qui servent à recevoir les extrémités de ligne des éléments de ligne (22).

5. Installation (2) selon la revendication précédente, dans laquelle est disposé un autre manipulateur (32), qui est conçu pour l'équipement respectif des deuxièmes transporteurs (48) avec les boîtiers de connecteur (60).

6. Installation (2) selon l'une des revendications 3 à 5, dans laquelle est prévu une station de connecteur (E), qui est conçue pour l'équipement des deuxièmes transporteurs (28) avec les extrémités de ligne des éléments de ligne (22), dans laquelle le manipulateur (32) est disposé à la station de connecteur (E) et les deuxièmes transporteurs (28) sont prévus sur des deuxièmes rails (50) de la station de connecteur (E).

7. Installation (2) selon la revendication précédente, dans laquelle l'unité de commande est conçue de telle sorte qu'à la station de connecteur (E), en fonction du faisceau de câbles à fabriquer, un nombre défini de deuxièmes transporteurs (28) avec un équipement prédéterminé avec des boîtiers de connexion (60) est prévu sur les deuxièmes rails (50).

8. Installation (2) selon l'une des revendications précédentes, dans laquelle l'unité de commande est conçue de telle sorte que pendant le fonctionnement, les deuxièmes transporteurs (28) pour être équipés avec les éléments de ligne (22) sont prévus dans un état assemblé et sont déplacés de cet état dans la structure de distribution.

9. Installation (2) selon l'une des deux revendications précédentes, dans laquelle l'unité de commande est configurée de telle sorte que pendant le fonctionnement, les deuxièmes transporteurs (28) sont déplacés de l'un aux postes de traitement suivants, tout en conservant la structure de distribution.

10. Installation (2) selon l'une des revendications précédentes, dans laquelle les deuxièmes transporteurs (28) sont individuellement mobiles.

11. Installation (2) selon l'une des revendications précédentes, dans laquelle les deuxièmes transporteurs (28) peuvent être entraînés électriquement ou magnétiquement.

12. Installation (2) selon l'une des revendications précédentes, dans laquelle un manipulateur est prévu pour fixer les éléments de ligne (22) les uns aux autres et le dispositif de commande est configuré de telle sorte que les éléments de ligne (22) sont fixés lors de l'expansion dans la structure de distribution.

13. Procédé pour la fabrication automatisée d'un faisceau de câbles (3), qui comprend une structure ramifiée et une pluralité d'éléments de ligne individuels (22), dans lequel
les éléments de ligne (22) sont automatiquement répartis dans une structure de distribution prédéterminée selon la structure ramifiée du faisceau de câbles (3), dans lequel à cet effet plusieurs deuxièmes rails (50) orientés parallèlement les uns aux autres et plusieurs deuxièmes transporteurs (28) répartis sur les deuxièmes rails (50) sont utilisés, et dans lequel les deuxièmes transporteurs (28) sont chacun équipés avec une extrémité de ligne respective des éléments de ligne (22) et ensuite, pour former la structure de distribution, les deuxièmes rails (50) sont déplacés dans une première direction (14) et les deuxièmes transporteurs (28) sont déplacés le long des deuxièmes rails (50) dans une deuxième direction (12), dans lequel une pluralité de deuxièmes postes de traitement adjacents les uns aux autres sont disposés et chacun des deuxièmes postes de traitement comprend une pluralité de deuxièmes rails (50), qui sont chacun mobiles individuellement dans la première direction (14) et caractérisé en ce
les deuxièmes rails (50) des deuxièmes postes de traitement adjacents en fonction de la structure de distribution et pour le transfert des deuxièmes transporteurs sont mis en alignement les uns par rapport aux autres.
